# EUROPÄISCHE PATENTANMELDUNG

(11) **EP 0 666 638 A2**
(43) Veröffentlichungstag der Anmeldung: **09.08.1995**
(21) Anmeldenummer: 95101706.0
(22) Anmeldetag: 08.02.1995
(51) Int. Cl.: H02M 7/538, H02M 3/337

(54) **Gegentaktschaltstufe**

(30) Priorität: 08.02.1994 DE 4403908
(71) Anmelder: HEINZINGER ELECTRONIC GmbH, D-83026 Rosenheim (DE)
(72) Erfinder: Franck, Felix, D-80333 München (DE)
(74) Vertreter: Heim, Hans-Karl, Dipl.-Ing.

(57) **Zusammenfassung**

Die Erfindung bezieht sich auf eine Gegentaktschaltstufe mit zwei Schaltern mit parallelgeschalteten parasitären Kapazitäten und mit einem gemeinsamen Bezugspunkt.
Da es bei konventioneller Schaltnetzteiltechnik nicht möglich ist ein gutes EMV-Verhalten, einen hohen Wirkungsgrad, einen weiten Arbeitsbereich und eine geringe Beanspruchung der Bauelemente bei niedriger Bauelementezahl mit einer Schaltung zu realisieren, zeigt die Erfindung hierzu eine Lösungsmöglichkeit.
Bei dieser Lösungsmöglichkeit ist speziell ein Energiespeicher vorgesehen, der den Potentialunterschied zwischen den Schaltern der Gegentaktschaltstufe zeitlich konstant hält.

## Beschreibung

Die Erfindung bezieht sich auf eine Gegentaktschaltstufe mit zwei Schaltern mit parallelgeschalteten parasitären Kapazitäten und mit einem gemeinsamen Bezugspunkt.

Die wichtigsten Ziele bei der Entwicklung von Schaltnetzteilen sind niedrige Kosten und kleine Bauform. Diese lassen sich in der Regel nur durch eine hohe Schaltfrequenz erreichen. Besonders gut geeignet sind bei solchen Netzteilen als Schaltelemente MOSFETs und IGBTs. Wegen ihrer großen parasitären Drain-Source-Kapazität bieten sich hier Schaltungen an, die nach dem ZVS-Prinzip (Zero-Voltage-Switching) arbeiten. Wird eine solche ZVS-Schaltentlastung resonant realisiert, so treten gegenüber der konventionellen hartschaltenden Schaltungstechnik wesentlich größere Bauelemente-Belastungen auf. Diese führen wiederum zu größerer Bauform und zu höheren Preisen.

Eine Realisierung von solchen ZVS-Schaltungen sind die multiresonanten Wandler, beschrieben in W.A. Tabisz, F.C. Lee: Zero-Voltage-Switching Multi-Resonance Technique, a novel approach to improve performance of high frequency quasi-resonant converters. IEEE PESC 88 record, Doshisha University, Kyoto, Japan, 1988, pp 9 ... 17. In dieser Schaltung sind alle drei dominanten parasitären Elemente (MOSFET-Drain-Source-Kapazität, Übertragungsinduktivität, Sperrschichtkapazität der Diode) in einem Arbeitsschwingkreis integriert. Dieser Arbeitsschwingkreis ist so abgestimmt, daß in einem bestimmten Arbeitsbereich für Schalter und Diode die ZVS-Bedingungen eingehalten werden. In diesem Arbeitsbereich besitzt die Schaltung einen sehr hohen Wirkungsgrad und ausgezeichnete EMV-Eigenschaften (EMV = Elektro-Magnetische Verträglichkeit). Der gravierende Nachteil dieser Schaltung ist die sehr aufwendige Realisierung der Resonanz-Induktivität. Weitere Nachteile sind der sehr stark eingeschränkte Arbeitsbereich und die große Beanspruchung der Komponenten durch die Resonanzströme und -spannungen.

Ein anderer Weg, ZVS zu erreichen, ist die Schaltentlastung über zusätzliche Hilfsschalter. Durch diese Hilfsschalter erhöht sich der Bauteileaufwand und die Herstellungskosten steigen.

Insgesamt betrachtet läßt sich daher mit konventioneller Schaltnetztechnik ein gutes EMV-Verhalten, hoher Wirkungsgrad, weiter Arbeitsbereich und eine geringe Beanspruchung der Bauelemente bei niedriger Bauelementeanzahl nicht mit einer Schaltung realisieren.

Es stellt sich daher die **Aufgabe**, eine Schaltstufe mit zwei Schaltern mit parallelgeschalteten parasitären Kapazitäten und mit einem gemeinsamen Bezugspunkt so zu verbessern, daß diese gleichzeitig in einem weiten Arbeitsbereich günstige EMV-Eigenschaften besitzt und einen sehr hohen Wirkungsgrad durch niedrige Schaltverluste erreicht. Gleichzeitig soll eine Überdimensionierung der Bauteile im Vergleich zu konventionellen, hartschaltenden Wandlern vermieden werden.

Diese Aufgabe wird erfindungsgemäß durch eine Gegentaktstufe mit zwei Schaltern mit parallelgeschalteten parasitären Kapazitäten und mit einem gemeinsamen Bezugspunkt gelöst, wobei die nicht mit dem gemeinsamen Bezugspunkt verbundenen Punkte der Schalter induktiv mit festen Spannungspotentialen verbunden sind und weiterhin ein Energiespeicher, der mindestens ein Schaltungselement aufweist, vorhanden ist, wobei der Energiespeicher den Potentialunterschied zwischen den nicht mit dem gemeinsamen Bezugspunkt verbundenen Punkten der Schalter zeitlich konstant hält, und am Energiespeicher und dem Bezugspunkt die Auskopplung der Last stattfindet. Die neue Schaltung zeigt daher eine Möglichkeit, diese vorausgehend genannten, weitgehend widersprüchlichen Eigenschaften zu kombinieren. Dies wird dadurch erreicht, daß die in jeder Wandlerschaltung nötige Strombegrenzung von der Laststromfilterung entkoppelt wird, wobei dies durch eine neuartige Kombination dreier Energiespeicher erreicht wird.

Die Verdeutlichung und Erläuterung der Erfindung wird anhand von drei Zeichnungen durchgeführt.

Die Schaltstufe besteht ähnlich einer Gegentaktstufe aus zwei Schaltern 1, 2. Diese Schalter 1, 2 werden vorzugsweise als Halbleiterschalter wie MOSFETs oder IGBTs ausgeführt. Beide Schalter 1, 2 sind in einem gemeinsamen Bezugspunkt 3 miteinander verbunden. Die beiden anderen Punkte 8, 9 der Schalter 1, 2 die nicht mit dem gemeinsamen Bezugspunkt 3 verbunden sind, sind über Induktivitäten 4, 5 mit den festen Spannungspotentialen der Spannungsversorgung verbunden. Die Spannungsversorgung besteht aus den beiden Teilspannungsquellen 6 und 7, die in Serie geschaltet sind und deren gemeinsamer Punkt 30 mit dem gemeinsamen Bezugspunkt 3 der beiden Schalter 1, 2 verbunden ist. Wesentlich ist bei der Spannungsversorgung nicht der Betrag oder die Symmetrie der beiden Teilspannungsquellen 6 und 7, sondern lediglich deren wechselspannungsmäßig niederohmige Verbindung zum gemeinsamen Bezugspunkt 3 der beiden Schalter 1, 2. Weiterhin sind die nicht mit dem gemeinsamen Bezugspunkt 3, sondern mit den Induktivitäten verbundenen Punkte 8 und 9 mit einem Energiespeicher 10 verbunden, der den Potentialunterschied zwischen den Punkten 8 und 9 zeitlich konstant hält. Der Energiespeicher 10 kann beispielsweise durch eine Spannungsquelle oder auch durch eine Kapazität realisiert werden. Die Auskopplung der Last 11 erfolgt zwischen dem Punkt 8 des Schalters 1 und der Induktivität 4 und dem gemeinsamen Bezugspunkt 3 der beiden Schalter.

Die Ansteuerung der Schaltung 20 erfolgt durch die Steuerschaltung 12 auf konventionelle Art, wie bei einer herkömmlichen Gegentaktschaltstufe. Dabei werden die Schalter 1, 2 abwechselnd ein- und ausgeschaltet. Zwischen den Schaltvorgängen ist eine Schaltpause eingefügt. Diese ist bei der erfindungsgemäßen Schaltung länger als bei den konventionellen Gegentaktschaltstufen. Während dieser Pausen ändert sich die Spannung zwischen den Punkten 8 und 3 bzw. 9 und 3 mit einer definierten Steilheit. Dies wird erreicht durch ein Umladen der parasitären Kapazitäten, die die Schalter 1 und 2 aus technologischen Gründen anhalten, mit Hilfe eines Stromes, der aus der Differenz der Ströme durch die beiden Induktivitäten 4 und 5 resultiert.

Durch diesen langsamen Anstieg ist das Störspektrum gering und damit das EMV-Verhalten besonders gut. In dem der Pause folgenden Einschaltzustand eines Schalters erhöht sich der Strom durch die mit diesem Schalter verbundene Induktivität, während der Strom durch die jeweils andere Induktivität entsprechend abnimmt. Wesentlich ist eine Dimensionierung der Induktivitäten 4, 5 derart, daß während der Einschaltphase die Stromänderung und damit die Differenz zwischen den Strömen durch diese Induktivitäten 4, 5 ausreichend groß ist, um laststromunabhängig die parasitären Kapazitäten der Schalter 1, 2 umzuladen. Durch die Laststromunabhängigkeit läßt sich ein besonders weiter Arbeitsbereich erzielen.

Da der Spannungsabfall an den Induktivitäten 4 und 5 im zeitlichen Mittel gegen Null geht, entspricht die Spannung am Element 10 der Summe der beiden Versorgungsspannungen 6 und 7. Damit ist die für die Dimensionierung der Schalter 1, 2 wichtige maximale Spannungsbelastung ebenfalls auf die Summe der Versorgungsspannungen festgelegt. So kann eine Überdimensionierung der Spannungsfestigkeit vermieden werden.

Die Schaltverluste dieser Schaltung 20 sind sehr gering, da ein Einschalten der Schalter 1 ,2 nur im Spannungsnulldurchgang erfolgt und während des Ausschaltvorgangs der Schalterstrom von den parasitären Kapazitäten getragen wird.

Verlustbehaftete Bauelemente wie Subber werden bei dieser Schaltungstechnik prinzipiell nicht benötigt. Daher ist auch die Anzahl der Komponenten besonders gering. Zudem können die bei konventionellen Schaltstufen eingesetzten Induktivitäten zur Filterung des Eingangsstromes entfallen. Diese sind hier in die Schaltstufe integriert.

Durch Einfügen zusätzlicher Parallelkapazitäten zu den parasitären Kapazitäten der Schalter läßt sich die Schaltgeschwindigkeit beeinflussen.

In einer besonders vorteilhaften Ausführung lassen sich zwei oder mehr der erfindungsgemäßen Schaltstufen zu einer Brückenschaltung verschalten. Dabei wird insgesamt nur eine Steuerschaltung 12 benötigt.

In einer weiteren Ausgestaltung der Erfindung ist es möglich, daß der Energiespeicher 10 derart realisiert ist, daß er über längere Zeit Energie abgeben kann. In diesem Falle kann ein Energiefluß vom Energiespeicher in die Spannungsquellen 6 und 7 stattfinden.

Eine weitere, vorteilhafte Ausgestaltung liegt darin, daß eine Last 11 so beschaffen ist, daß sie Energie abgeben kann. Hier stellt sich ein durch die Schalter 1, 2 gesteuerter Energiefluß von der Last in die Spannungsquellen 6 und 7 ein. Dies erlaubt einen bidirektionalen Betrieb (4-Quadranten-Betrieb) des Wandlers.

Eine andere, vorteilhafte Ausgestaltung der Erfindung liegt darin, daß ein Modulator 13 in die Steuerschaltung 12 integriert ist. Dieser Modulator 13 kann den Energiefluß durch die Schaltstufe 20 nach Betrag und Vorzeichen mittels Pulsbreitenmodulation steuern.

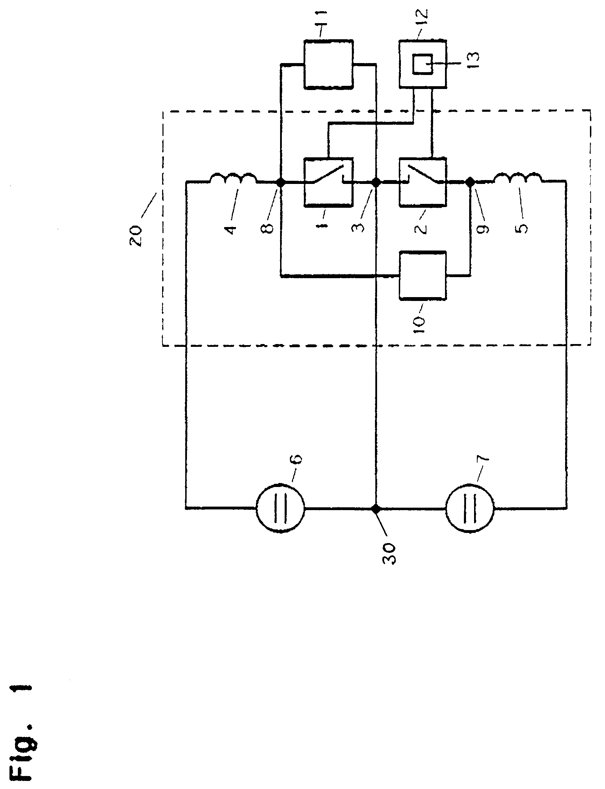

In Figur 1 ist eine Schaltstufe 20 nach der Erfindung dargestellt. Die beiden Schalter 1 und 2 besitzen einen gemeinsamen Bezugspunkt 3. Die nicht mit diesem Bezugspunkt verbundenen Anschlüsse dieser Schalter 1, 2, nämlich die Punkte 8 und 9, sind über Induktivitäten 4 bzw. 5 mit den Spannungsquellen 6 bzw. 7 verbunden. Ein Energiespeicher 10, der zwischen den Punkten 8 und 9 angeordnet ist, sorgt dafür, daß die Spannungsdifferenz zwischen diesen Punkten 8, 9 zeitlich konstant bleibt. Weiterhin ist der Punkt 3 mit einem gemeinsamen Verbindungspunkt 30 der beiden Spannungsquellen 6 und 7 verbunden. Die Last 11 ist zwischen dem Punkt 8 und dem gemeinsamen Bezugspunkt 3 angeordnet. Die Schalter 1, 2 werden durch eine Steuerschaltung 12 angesteuert. Ein optionaler Modulator 13 kann durch Pulsbreitenmodulation den Leistungsfluß durch die Schaltstufe 20 steuern.

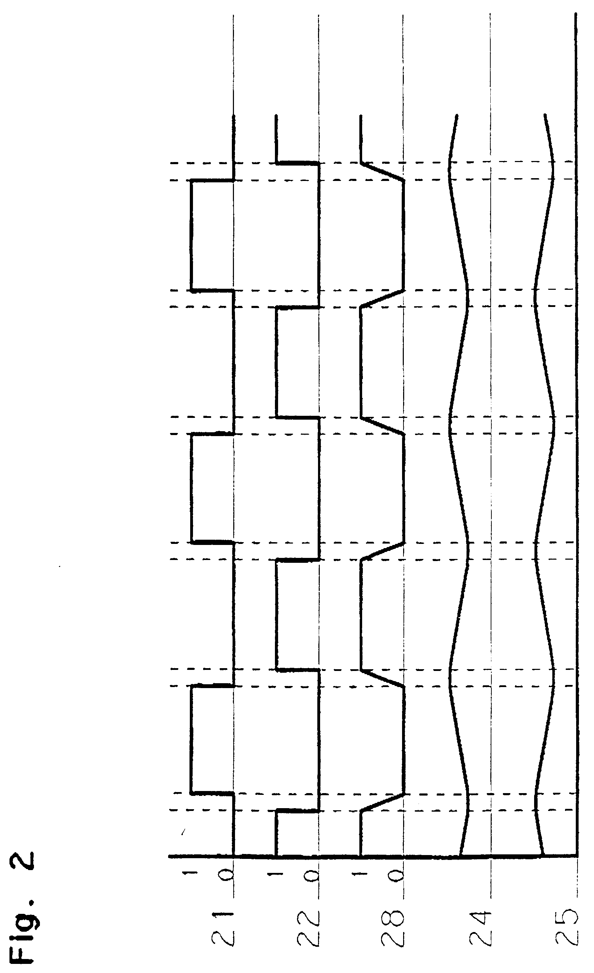

In Figur 2 ist der zeitliche Verlauf der wesentlichen Spannungen und Ströme der erfindungsgemäßen Schaltung 20 dargestellt. Die Kurve 21 zeigt ein mögliches Ansteuersignal für den Schalter 1. Dieser ist im Zustand "0" geöffnet und im Zustand "1" geschlossen. Entsprechend zeigt die Kurve 22 den Schaltzustand des Schalters 2. Beide Schalter 1, 2 werden abwechselnd geöffnet und geschlossen. Durch eine Pause wird sichergestellt, daß beide Schalter niemals gleichzeitig geschlossen sind, da dies zu einem Kurzschluß führen würde. Die Kurve 28 zeigt den zeitlichen Verlauf der Spannung an der Last 11 zwischen dem Punkt 8 und dem Punkt 3. Diese Spannung zeichnet sich durch einen rampenförmigen Anstieg bzw. Abfall während der Schaltpausen der Schalter 1 bzw. 2 aus. Die Kurven 24 und 25 zeigen noch die Stromverläufe durch die Induktivitäten 4 und 5.

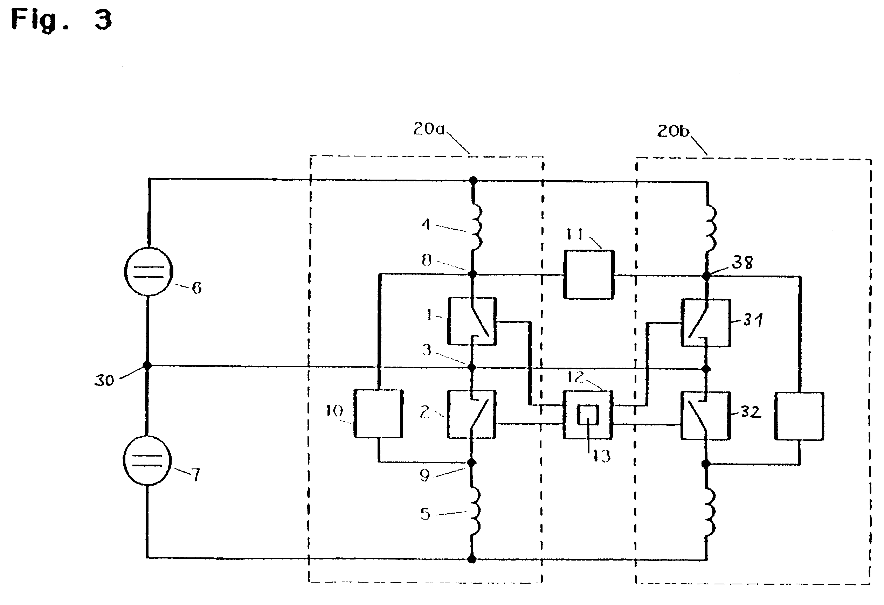

Figur 3 zeigt beispielhaft die Zusammenschaltung zweier identischer, erfindungsgemäßer Gegentaktschaltstufen 20a und 20b zu einer Brückenschaltung. Dabei ist die zweite Gegentaktschaltstufe 20b parallel zu der ersten Gegentaktschaltstufe 20a mit den beiden Versorgungsspannungsquellen 6 und 7 verschaltet. Die Last befindet sich zwischen dem Punkt 8 der ersten Gegentaktschaltstufe 20a und dem Punkt 38. der zweiten Gegentaktschaltstufe 20b. Alle Schalter 1, 2, 31, 32 der beiden Gegentaktschaltungen 20a und 20b werden über eine gemeinsame Steuerschaltung 12 angesteuert. In dieser Steuerschaltung kann ein Modulator 13 enthalten sein. Für die Ansteuerung der Schalter innerhalb einer Gegentaktschaltstufe 20a, 20b gilt die zuvor genannte Bedingung, daß beide Schalter 1, 2 bzw. 31, 32 nicht gleichzeitig eingeschaltet sein dürfen. Unter Berücksichtigung dieser Bedingung dürfen die Phasen der Taktsignale zwischen den beiden Gegentaktschaltstufen 20a und 20b beliebige Werte annehmen.

## Patentansprüche

1. Gegentaktschaltstufe, mit zwei Schaltern mit parallelgeschalteten parasitären Kapazitäten und mit einem gemeinsamen Bezugspunkt,
dadurch **gekennzeichnet,**
daß die nicht mit dem gemeinsamen Bezugspunkt (3) verbundenen Punkte (8,9) der Schalter (1,2) induktiv (4,5) mit festen Spannungspotentialen (6,7) verbunden sind und daß weiterhin ein Energiespeicher (10), der ein oder mehrere Schaltungselemente aufweist, vorhanden ist, wobei der Energiespeicher (10) den Potentialunterschied zwischen den nicht mit dem gemeinsamen Bezugspunkt (3) verbundenen Punkten (8,9) der Schalter (1,2) zeitlich konstant hält, und daß am Energiespeicher (10) und dem Bezugspunkt (3) die Auskopplung der Last (11) stattfindet.

2. Gegentaktschaltstufe nach Anspruch 1,
dadurch **gekennzeichnet,**
daß der Energiespeicher (10) derart gestaltet ist, daß er über längere Zeit Energie abgeben kann, so daß ein Energietransfer in die beiden Spannungsquellen (6) und (7) möglich ist.

3. Gegentaktschaltstufe nach Anspruch 1 oder 2,
dadurch **gekennzeichnet,**
daß die Last (11) derart gestaltet ist, daß sie über längere Zeit Energie abgeben kann, so daß ein Ernergietransfer in die beiden Spannungsquellen (6) und (7) möglich ist.

4. Gegentaktschaltstufe nach einem der Ansprüche 1 bis 3,
dadurch **gekennzeichnet,**
daß eine Steuerschaltung (12) zur Schaltansteuerung der Schalter (1,2) vorgesehen ist und daß die Steuerschaltung (12) einen Modulator (13) aufweist, der mit Hilfe einer Pulsbreitenmodulation die übertragene Energie nach Betrag und Vorzeichen zeitlich variabel steuert.

5. Brückenschaltung mit mindestens zwei Gegentaktschaltstufen nach einem der Ansprüche 1 bis 4,
dadurch **gekennzeichnet,**
daß die Gegentaktschaltstufen (20a,20b) parallel zu den Spannungspotentialen (6,7) angeordnet sind, daß die Punkte (8) über die Last (11) verbunden sind und
daß die Schalter (1,2) über eine gemeinsame Steuerschaltung (12) schaltbar sind.
